# EUROPÄISCHE PATENTANMELDUNG

(11) **EP 4 432 409 A1**
(43) Veröffentlichungstag der Anmeldung: **18.09.2024**
(21) Anmeldenummer: 23161931.3
(22) Anmeldetag: 14.03.2023
(51) Int. Cl.: H01M 10/04, H01M 10/0525, H01M 50/15, H01M 50/176, H01M 50/536, H01M 50/54, H01M 50/103, H01M 50/548, H01M 50/557

(54) **VERFAHREN ZUM HERSTELLEN EINER BATTERIEZELLE MIT ZWEI AUF GEGENÜBERLIEGENDEN SEITEN ANGEORDNETEN BATTERIEPOLEN**

(71) Anmelder: Cellforce Group GmbH, 72072 Tübingen (DE)
(72) Erfinder: Die Erfindernennung liegt noch nicht vor

(57) **Zusammenfassung**

Die Erfindung betrifft ein Verfahren zum Herstellen einer Batteriezelle mit zwei Batteriepolen, aufweisend einen ersten Zelldeckel mit einem ersten Batteriepol auf einer ersten Seite und aufweisend einen zweiten Zelldeckel mit einem zweiten Batteriepol auf einer, der ersten Seite gegenüberliegend angeordneter, zweiter Seite, wobei zwei Zellstapel mit Anodenschichten und Kathodenschichten bereitgestellt werden, wobei die Kathodenschichten Kathodenableiter und die Anodenschichten Anodenableiter aufweisen, wobei die Zellstapel derart positioniert werden, dass ihre Anodenableiter einander zugewandt sind und rückseitig auf einer Rückseite des zweiten Zelldeckels zumindest bereichsweise auf einem Kollektor aufliegen, welcher elektrisch leitend mit dem zweiten Batteriepol verbunden ist, wobei die Anodenableiter elektrisch leitend mit dem Kollektor des zweiten Zelldeckels verbunden und die mindestens zwei Zellstapel durch Biegen und/oder Falten der Anodenableiter zusammengelegt werden, wobei die zusammengelegten Zellstapel in einem Zellgehäusemantel positioniert werden, wobei die Kathodenableiter elektrisch leitend mit einem rückseitig auf dem ersten Zelldeckel angeordneten Kollektor verbunden werden, welcher elektrisch leitend mit dem ersten Batteriepol verbunden ist, wobei der Zellgehäusemantel durch den ersten Zelldeckel verschlossen wird. Des Weiteren betrifft die Erfindung eine Batteriezelle.

## Beschreibung

Die Erfindung betrifft ein Verfahren zum Herstellen einer Batteriezelle mit zwei Batteriepolen, aufweisend einen ersten Zelldeckel mit einem ersten Batteriepol auf einer ersten Seite und aufweisend einen zweiten Zelldeckel mit einem zweiten Batteriepol auf einer, der ersten Seite gegenüberliegend angeordneten, zweiten Seite. Des Weiteren betrifft die Erfindung eine Batteriezelle, die durch das Verfahren hergestellt wird.

Bei der Herstellung von elektrochemischen Speichern, wie beispielsweise einer Lithium-Ionen-Batterien, werden üblicherweise mehrere, einander abwechselnde, Lagen bzw. Schichten von Anoden, Kathoden und Separatoren in Form von Zellstapeln bzw. sogenannten Zellstacks angeordnet. Derartige Anodenschichten und Kathodenschichten können durch Wickeln oder Stapeln zu Zellstapeln geformt werden, die in einem Zellengehäuse für den endgültigen Gebrauch durch Kunden positioniert werden.

Bei der Herstellung von Batteriezellen müssen die jeweiligen Anodenschichten und Kathodenschichten mit den Batteriepolen verbunden werden. Hierzu dienen Anodenableiter und Kathodenableiter als Verbindungsleitungen zwischen den Batteriepolen und den Anodenschichten bzw. Kathodenschichten. Diese Anodenableiter und Kathodenableiter werden üblicherweise bei einem in das Zellgehäuse eingesetzten Zellstack überdimensioniert, um ein technisch einfaches Verbinden der Anodenableiter und Kathodenableiter mit den Rückseiten der Batteriepole zu ermöglichen. Eine derartige Lösung erfordert ein zusätzliches Volumen im Zellgehäuse der Batteriezelle, welches nach der Herstellung ungenutzt bleibt und somit die Energiedichte der Batteriezelle mindern kann. Werden mehrere Zellstacks im Zellgehäuse verbaut ist ein noch größeres Volumen vorzusehen, um die Vielzahl der Anodenableiter und Kathodenableiter mit den Batteriepolen verbinden zu können und die jeweiligen Zelldeckel, in welche die Batteriepole eingebracht sind, als Verschluss des Zellgehäuses zu verwenden.

Die vorliegende Erfindung hat daher die Aufgabe, ein Verfahren zum Herstellen Batteriezellen zu schaffen, welches technisch einfach umsetzbar ist und ein ungenutztes Volumen im Zellgehäuse minimieren kann. Diese Aufgabe wird durch die im Anspruch 1 angegebenen Merkmale gelöst. Weitere vorteilhafte Ausgestaltungen der Erfindung sind Bestandteil der Unteransprüche.

Gemäß einem Aspekt der Erfindung wird ein Verfahren zum Herstellen einer Batteriezelle mit zwei Batteriepolen bereitgestellt. Eine derartige Batteriezelle weist einen ersten Zelldeckel mit einem ersten Batteriepol auf einer ersten Seite und einen zweiten Zelldeckel mit einem zweiten Batteriepol auf einer, der ersten Seite gegenüberliegend angeordneter, zweiter Seite auf.

In einem Schritt des Verfahrens werden mindestens zwei Zellstapel mit durch Separatorschichten voneinander beabstandeten Anodenschichten und Kathodenschichten bereitgestellt. Vorteilhafterweise wechseln sich die Anodenschichten, Kathodenschichten und Separatorschichten einander ab. Dabei kann der Zellstapel dazu eingerichtet sein, eine Lithium-Ionen Batteriezelle auszubilden.

Der Übersicht halber wird im Folgenden von zwei Zellstapeln ausgegangen. Das Verfahren ist jedoch nicht auf zwei Zellstapel beschränkt. Vielmehr kann das Verfahren bei Batteriezellen mit einer beliebigen Anzahl von Zellstapeln eingesetzt werden.

Die jeweiligen Anodenschichten, Kathodenschichten können als sogenannte Aktivmaterialen auf Trägerfolien oder Trägersubstraten ausgestaltet sein. Beispielsweise können die Anodenschicht auf einer Kupferfolie und die Kathodenschicht auf einer Aluminiumfolie aufgebracht sein.

Die jeweiligen Anodenschichten, Kathodenschichten und Separatorschichten sind miteinander verbunden. Dies kann mit Hilfe von mechanischen und/oder stoffschlüssigen Verbindungsverfahren realisiert sein.

Die Kathodenschichten weisen hierbei Kathodenableiter auf, welche über die Kathodenschichten in Richtung der ersten Seite der Batteriezelle hinausragen. Die Anodenschichten weisen Anodenableiter auf, welche in Richtung der zweiten Seite über die Anodenschichten hinausragen. Somit können die Anodenschichten in Richtung der zweiten Seite mit einem Batteriepol und die Kathodenschichten in Richtung der zweiten Seite mit einem Batteriepol elektrisch leitend verbunden werden. Dies ermöglicht eine Anordnung von Batteriepolen auf zwei gegenüberliegenden Seiten. Die Kathodenableiter und die Anodenableiter können als Teile der Trägerfolien ausgestaltet sein, welche nicht mit einem Aktivmaterial versehen sind und welche aus den Zellstapeln seitlich hinausgeführt werden.

Die mindestens zwei Zellstapel werden derart positioniert, dass ihre Kathodenableiter einander zugewandt sind und rückseitig auf einer Rückseite des ersten Zelldeckels zumindest bereichsweise auf einem Kollektor aufliegen, welcher elektrisch leitend mit dem ersten Batteriepol verbunden ist. Durch diese Maßnahme kann die Konstruktion bzw. Herstellung der Batteriezelle derart modifiziert werden, dass in einem ersten Fügeschritt für die Herstellung der Verbindung zwischen allen Kathodenableitern und dem Kollektor des ersten Zelldeckels ein besonders einfacher Werkzeugzugang gewährleistet ist.

In einem weiteren Schritt werden die Kathodenableiter elektrisch leitend mit dem Kollektor des ersten Zelldeckels verbunden. Nach dem Fügen bzw. Verbinden werden die mindestens zwei Zellstapel durch Biegen und/oder Falten der Kathodenableiter zusammengelegt. Die zwei zusammengelegten Zellstapel werden gemeinsam mit den hinausragenden Anodenableitern zueinander benachbart angeordnet. Hierdurch können die Zellstapel parallel zueinander und nebeneinander vorliegen.

Die zusammengelegten Zellstapel werden anschließend in einem Zellgehäusemantel positioniert. Hierbei verschließt der erste Zelldeckel mit den elektrisch leitend verbundenen Kathodenableitern den Zellgehäusemantel einseitig. Somit können die Zellstapel von einer Seite in den Zellgehäusemantel hineingeschoben werden, bis der erste Zelldeckel den Zellgehäusemantel abschließen kann. Der Zellgehäusemantel kann aus Aluminium, einer Aluminiumlegierung, einem Kunststoff und dergleichen bestehen. Dabei kann der Zellgehäusemantel aus einer Materiallage oder aus mehreren Materiallagen, wie beispielsweise mit einer innenseitigen Beschichtung, bestehen. Der Zellgehäusemantel kann beispielsweise ein Formbauteil, Stanz-Biege-Bauteil, ein Strangpress-Bauteil und dergleichen sein.

In einem weiteren Schritt werden die Anodenableiter elektrisch leitend mit einem rückseitig auf dem zweiten Zelldeckel angeordneten Kollektor verbunden, welcher elektrisch leitend mit dem zweiten Batteriepol gekoppelt ist, wobei der Zellgehäusemantel durch den zweiten Zelldeckel verschlossen wird. Durch diesen Schritt wird die Batteriezelle im Wesentlichen fertiggestellt. Je nach Ausgestaltung der Batteriezelle können der erste Zelldeckel und der zweite Zelldeckel durch Kleben, Löten, Schweißen oder Verpressen mechanisch mit dem Zellgehäusemantel verbunden werden, um ein Innenvolumen des Zellgehäusemantels hermetisch abzudichten und beispielsweise ein Befüllen mit einem Elektrolyt zu ermöglichen.

Zum Befüllen mit Elektrolyt können beispielsweise Einfüllöffnungen vorgesehen sein. Alternativ kann vor einem Einbringen des zweiten Zelldeckels das Innenvolumen des Zellgehäusemantels mit Elektrolyt befüllt werden.

Nach einem weiteren Aspekt der Erfindung wird eine Batteriezelle bereitgestellt. Die Batteriezelle ist vorzugsweise durch das erfindungsgemäße Verfahren hergestellt. Die Batteriezelle weist einen ersten Zelldeckel mit einem ersten Batteriepol auf einer ersten Seite und einen zweiten Zelldeckel mit einem zweiten Batteriepol auf einer, der ersten Seite gegenüberliegend angeordneter, zweiter Seite auf. Weiterhin weist die Batteriezelle mindestens zwei Zellstapel auf, welche in einem Innenvolumen eines Zellgehäusemantels angeordnet sind. Der Zellgehäusemantel ist durch die Zelldeckel jeweils endseitig verschlossen. Hierbei sind Kathodenableiter der Zellstapel elektrisch leitend mit dem ersten Batteriepol und Anodenableiter elektrisch leitend mit dem zweiten Batteriepol verbunden.

Eine derartige Batteriezelle kann mit einem minimierten ungenutzten Volumen im Innenvolumen des Zellgehäusemantels ausgebildet werden. Dabei wird im ersten Schritt das Verbinden der Kathodenableiter mit dem Kollektor des ersten Zelldeckels besonders vereinfacht, da die jeweiligen Kathodenableiter durch die ebene Positionierung der Zellstapel und des Kollektors zwischen den Zellstapeln einen optimalen Werkzeugzugang ermöglicht. Ein hierfür einsetzbares Werkzeug kann beispielsweise ein Laserschweiß-Werkzeug, Ultraschweißwerkzeug und dergleichen sein.

Auch der Zugang des Werkzeugs zum Kollektor des zweiten Zelldeckels kann vereinfacht werden, wenn der zweite Zelldeckel gegenüber den mindestens zwei Zellstapeln im Zellgehäusemantel flach aufliegt und somit parallel zu den Anodenableitern angeordnet ist. Hierdurch können die Anodenableiter und der Kollektor technisch einfach aneinander gepresst werden, um eine anschließende Verschweißung oder Verlötung einzuleiten. Insbesondere können die Anodenableiter eines ersten Zellstapels beim Verbinden der Anodenableiter des zweiten Zellstapels aus einem Arbeitsbereich des Fügewerkzeugs geschwenkt bzw. gebogen werden, um einen besonders einfachen Werkzeugzugang zu ermöglichen. Nach dem Verbinden der Anodenableiter des zweiten Zellstapels können die Anodenableiter des zweiten Zellstapels zum Kollektor hin gebogen und mit diesem ebenfalls verbunden werden.

Je nach Ausgestaltung ist das Verfahren nicht auf das Schweißen oder Löten beschränkt. Die Anodenableiter und die Kathodenableiter können mit den jeweiligen Kollektoren auch gekrimpt, gestanzt, gebördelt, genietet oder verschraubt werden.

Durch das Verfahren kann weiterhin eine besonders kompakte Bauweise der Batteriezelle erzielt werden.

Gemäß einer Ausführungsform sind die miteinander verbundenen Kathodenableiter der mindestens zwei Zellstapel gleich lang ausgestaltet. Je nach Ausgestaltung wird mindestens ein Paket aus miteinander verbundenen Anodenableitern mindestens eines Zellstapels geformt. Hierbei kann ein Zellstapel ein oder mehrere Pakete aufweisen. Alternativ kann ein Paket oder mehrere Pakete aus jeweils mehreren Anodenableitern mindestens zwei Zellstapel gebildet werden.

Durch das Formen der Anodenableiter werden Zellstapel mit unterschiedlich langen und/oder unterschiedlich breiten Paketen von Anodenableitern ausgebildet. Hierbei werden die unterschiedlich breiten Pakete von Anodenableitern entlang einer Breitenrichtung zueinander versetzt, insbesondere ohne einen Überlapp zumindest entlang der Höhenrichtung und/oder Längenrichtung der Batteriezelle, oder einander zumindest bereichsweise überlappend geformt.

Die Breitenrichtung entspricht hierbei einer Richtung, welche quer zur Flächennormalen des ersten oder zweiten Zelldeckels ausgerichtet ist. Die Flächennormale des ersten oder zweiten Zelldeckels zeigt hierbei in eine Längsrichtung. Eine Höhenrichtung ist beispielsweise quer zur Längsrichtung und quer zur Breitenrichtung definiert.

Bedingt durch die Möglichkeit mehrere zueinander versetzte Pakete von Anodenableitern herzustellen, kann eine Gesamtdicke von zu schweißenden Anodenableitern reduziert werden, wodurch auch ein resultierender Hitzeeintrag in die Zellstapel minimiert und die Lebenserwartung der Zellstapel maximiert wird. Aufgrund der reduzierten Dicke der zu schweißenden Pakete kann der Verbindungsvorgang zwischen den Anodenableitern und dem Kollektor auch beschleunigt werden.

Je nach Fügeprozess kann die Anzahl der schweißbaren Lagen von Anodenableitern und/oder Kathodenableitern limitiert sein. Bei derartigen Fügeprozessen kann bei einer Überschreitung der maximal zulässigen Anzahl von Lagen eine Aufteilung in mehrere Pakete erfolgen. Die jeweiligen Pakete können entlang einer beliebigen Raumrichtung zumindest bereichsweise versetzt zueinander angeordnet sein, um ein bereichsweises Fügen der Lagen mit den entsprechenden Kollektoren zu ermöglichen.

Insbesondere können die unterschiedlich langen Pakete von Anodenableitern nacheinander und an unterschiedlichen Verbindungspositionen mit dem Kollektor elektrisch leitend verbunden werden. Zuerst kann beispielsweise ein entlang der Breitenrichtung kürzeres Paket an Anodenableitern mit dem Kollektor verschweißt werden. Während dieser Zeit kann ein längeres Paket von Anodenableitern durch eine Halterung aus dem Weg eines Werkzeugs gebogen werden, um den Werkzeugzugang zu erleichtern. Nach dem Verbinden des kürzeren Pakets kann das längere Paket gegen den Kollektor gepresst und an einer versetzten Position mit dem Kollektor verbunden, beispielsweise verschweißt, werden.

Nach einer weiteren Ausführungsform werden die unterschiedlich langen und/oder breiten Pakete von Anodenableiter örtlich zueinander versetzt oder einander zumindest bereichsweise überlappend elektrisch leitend mit dem Kollektor des zweiten Zelldeckels verbunden. Durch diese Maßnahme können die jeweiligen Pakete an unterschiedlichen Positionen mit dem Kollektor elektrisch leitend verbunden werden. Darüber hinaus ermöglicht eine derartige Ausgestaltung das Ausbilden von Paketen mit reduzierter Dicke bzw. Anzahl von gestapelten Anodenableitern, wodurch beispielsweise ein Ultraschallschweißvorgang technisch vereinfacht werden kann.

Ein Formen der Anodenableiter kann hierbei durch ein bereichsweises Abschneiden oder Ablängen der Anodenableiter als Pakete oder durch ein Bereitstellen von Anodenschichten mit entsprechend gekürzten oder geschnittenen Anodenableitern erfolgen. Hierbei können die Anodenableiter entlang der Höhenrichtung, beispielsweise ähnlich einem Register, ausgeschnittene Abschnitte aufweisen, um ein seitliches Nebeneinanderanordnen von unterschiedlichen Paketen von Anodenableitern zum vereinfachten Verbinden mit dem Kollektor zu gewährleisten.

Gemäß einem weiteren Ausführungsbeispiel werden die unterschiedlich langen und/oder breiten Pakete von Anodenableiter einander überlappend elektrisch leitend mit dem Kollektor des zweiten Zelldeckels verbunden. Die Pakete von Anodenableitern eines ersten Zellstapels werden in einem ersten Schritt mit dem Kollektor verbunden. In einem nachfolgenden Schritt werden die Pakete von Anodenableitern eines zweiten Zellstapels zumindest bereichsweise auf den verbundenen Anodenableitern des ersten Zellstapels angeordnet und mit diesen und/oder durch diese hindurch mit dem Kollektor elektrisch leitend verbunden. Durch diese Maßnahme kann beispielsweise ein zweiteiliges Schweißen der Anodenableitern umgesetzt werden, bei dem Pakete nacheinander auf einer, im Wesentlichen selben, Position des Kollektors verbunden werden. Somit kann ein gleichzeitiges Schweißen von Anodenableitern eines gesamten Zellstapels oder der Zellstapel mit einem resultierenden erhöhten Wärmeeintrag in die Zellstapel vermieden werden.

Das Verbinden der Pakete von Anodenableitern in mehreren Schritten kann besonders flexibel erfolgen, wenn eine derartige elektrisch leitfähige Verbindung entlang einer Verbindungsnaht oder entlang mehrerer Verbindungsnähte mit dem Kollektor des zweiten Zelldeckels erfolgt.

Werden die jeweiligen Pakete von Anodenableitern entlang einer Verbindungsnaht bzw. Verbindungsfläche mit dem Kollektor verbunden, kann dies den Herstellungsprozess beschleunigen bzw. vereinfachen, da ein Werkzeug im Wesentlichen entlang eines vordefinierten eindimensionalen Pfads verfahren werden muss.

Bei der Verbindung von mehreren Paketen von Anodenableitern an jeweils unterschiedlichen Positionen bzw. Verbindungsnähten kann der Leitungsquerschnitt der Anodenableitern beim Übergang zum Kollektor vergrößert werden, wodurch die Stromfestigkeit erhöht und die thermische Beanspruchung der Batteriezelle im Betrieb gesenkt werden.

Nach einem weiteren Aspekt der Erfindung wird ein Verfahren zum Herstellen einer Batteriezelle mit zwei Batteriepolen bereitgestellt. Die Batteriezelle weist einen ersten Zelldeckel mit einem ersten Batteriepol auf einer ersten Seite und einen zweiten Zelldeckel mit einem zweiten Batteriepol auf einer, der ersten Seite gegenüberliegend angeordneter, zweiter Seite auf

Dabei werden analog zum bereits beschrieben Verfahren zwei Zellstapel mit durch Separatorschichten voneinander beabstandeten Anodenschichten und Kathodenschichten bereitgestellt. Die Kathodenschichten weisen hierbei Kathodenableiter auf, welche über die Kathodenschichten in Richtung der ersten Seite hinausragen, und die Anodenschichten weisen Anodenableiter auf, welche in Richtung der zweiten Seite über die Anodenschichten hinausragen.

Im Unterschied zum bereits beschriebenen Verfahren werden hier die Zellstapel derart positioniert, dass ihre Anodenableiter einander zugewandt sind und rückseitig auf einer Rückseite des zweiten Zelldeckels zumindest bereichsweise auf einem Kollektor aufliegen. Der Kollektor des zweiten Zelldeckels ist elektrisch leitend mit dem zweiten Batteriepol verbunden. Alternativ wird der Kollektor während des Verfahrens mit dem zweiten Batteriepol des zweiten Zelldeckels leitend verbunden. Dies kann beispielsweise zeitgleich mit dem Verbinden der Anodenableiter erfolgen.

Nach dem elektrisch leitenden Verbinden der jeweiligen Anodenableiter mit dem Kollektor des zweiten Zelldeckels werden die mindestens zwei Zellstapel durch Biegen und/oder Falten der Anodenableiter zusammengelegt. Hierbei fungieren die Anodenableiter als Scharniere bzw. Drehachsen, um die Zellstapel zusammenzusetzen. Derartig angeordnete Zellstapel weisen alle Anodenableiter und den zweiten Zelldeckel an der zweiten Seite der herzustellenden Batteriezelle. Zeitgleich werden alle Kathodenableiter durch das Zusammenfügen der Zellstapel auf die erste Seite gebracht. Im zusammengesetzten bzw. zusammengelegten Zustand sind die Zellstapel mit den hinausragenden Kathodenableitern zueinander benachbart angeordnet. Je nach Ausgestaltung können sich die Zellstapel berühren, voneinander beabstandet sein und/oder miteinander verbunden sein. Beispielsweise können die mindestens zwei Zellstapel durch einen Kleber oder eine Klebeebene miteinander verbunden werden. Weiterhin können alternativ oder zusätzlich die Zellstapel durch eine Ummantelung, beispielsweise mittels eines schlauchförmigen Kunststoffs, mechanisch miteinander verbunden werden.

Die zusammengelegten Zellstapel werden anschließend in einem Zellgehäusemantel positioniert. Hierzu werden die Zellstapel zusammen mit dem zweiten Zelldeckel in den Zellgehäusemantel hineingeschoben bzw. der Zellgehäusemantel über die Zellstapel gestülpt.

Der zweite Zelldeckel verschließt vorteilhafterweise mit den elektrisch leitend verbundenen Anodenableitern den Zellgehäusemantel einseitig an der zweiten Seite. In einem weiteren Schritt werden die Kathodenableiter elektrisch leitend mit einem rückseitig auf dem ersten Zelldeckel angeordneten Kollektor verbunden, welcher elektrisch leitend mit dem ersten Batteriepol verbunden ist. Hierfür kann der Kollektor in einem 90° Winkel gegenüber einer Breitenrichtung der Batteriezelle bzw. der Zellstapel positioniert werden und somit parallel zu den abstehenden Kathodenableitern angeordnet sein. Durch diese Maßnahme kann ein besonders vorteilhafter Werkzeugzugang zum elektrisch leitfähigen Verbinden der Kathodenableiter mit dem Kollektor realisiert werden.

In einem möglichen weiteren Schritt des Verfahrens wird der Zellgehäusemantel durch den ersten Zelldeckel verschlossen. Hierzu kann der erste Zelldeckel um 90° zurückgeklappt werden, um die Öffnung des Zellgehäusemantels an der ersten Seite zu verschließen.

Je nach Ausgestaltung können die mindestens zwei Zelldeckel durch Reibschluss, Kraftschluss und/oder Stoffschluss mit dem Zellgehäusemantel verbunden werden, um ein Innenvolumen des Zellgehäusemantels bzw. der Batteriezelle fluiddicht abzuschließen. Beispielsweise können die Zelldeckel durch Laserschweißen mit dem Zellgehäusemantel stoffschlüssig verbunden werden.

Bei einer alternativen oder zusätzlichen Ausgestaltung können die Zelldeckel durch Bördeln mit dem Zellgehäusemantel mechanisch und fluiddicht gekoppelt werden.

Bei einem Ausführungsbeispiel sind die miteinander verbundenen Anodenableiter der mindestens zwei Zellstapel gleich lang ausgestaltet. Mindestens ein Paket aus miteinander verbundenen Kathodenableitern mindestens eines Zellstapels wird anschließend geformt, um Zellstapel mit unterschiedlich langen und/oder unterschiedlich breiten Paketen von Kathodenableitern auszubilden. Vorteilhafterweise werden die unterschiedlich breiten Pakete von Kathodenableitern zumindest entlang einer Höhenrichtung zueinander versetzt, insbesondere ohne Überlapp, geformt oder einander zumindest bereichsweise überlappend geformt werden. Die Länge von Anodenableitern und/oder Kathodenableitern kann dabei einer Ausdehnung der Zellstapel in einer Raumrichtung entsprechen, die durch beide Zelldeckel der Batteriezelle hindurch verläuft. Diese Raumrichtung kann als Längenrichtung definiert sein. Durch diese Maßnahme werden zumindest einige der Kathodenableiter in ihrer Länge gekürzt, um ein elektrisch leitfähiges Verbinden mit dem Kollektor an unterschiedlichen Positionen zu ermöglichen. Somit wird ein gleichzeitiges Schweißen oder Löten von Kathodenableitern der Zellstapel mit einem entsprechend erhöhten Wärmeeintrag in die Zellstapel vermieden.

Bei einer alternativen oder zusätzlichen Umsetzung, können die Kathodenableiter entlang der Höhenrichtung geformt werden, wodurch Kathodenableiter-Abschnitte entstehen, welche in Höhenrichtung nebeneinander positioniert sind und separat mit dem Kollektor verbindbar sind. Derartig geformte Kathodenableiter-Abschnitte können ebenfalls als Pakete zusammengefasst werden und analog einem Register vorliegen. Hierdurch können alle Kathodenableiter entlang einer gemeinsamen Verbindungslinie mit dem Kollektor elektrisch leitend verbunden werden. Ein entsprechendes Werkzeug, beispielsweise Ultraschall-Schweißwerkzeug oder ein Laserschweißwerkzeug muss somit entlang eines linearen Pfads verfahren werden, um alle Kathodenableiter mit dem Kollektor zu verbinden. Hieraus resultieren eine Zeitersparnis und eine Kostenersparnis aufgrund einer vereinfachten Werkzeugansteuerung.

Nach einem weiteren Ausführungsbeispiel werden die unterschiedlich langen und/oder unterschiedlich breiten Pakete von Kathodenableitern örtlich zueinander versetzt, insbesondere in Breitenrichtung und/oder in Höhenrichtung nebeneinander mit dem Kollektor verbunden, oder zumindest bereichsweise einander überlappend elektrisch leitend mit dem Kollektor des ersten Zelldeckels verbunden werden. Diese Maßnahme ermöglicht eine flexible und vielseitige Verbindung der Kathodenableiter mit dem Kollektor des ersten Zelldeckels.

Die Kathodenableiter können auf einem besonders kompakt ausgestalteten Kollektor geschweißt oder gelötet werden, wenn die unterschiedlich langen Pakete von Kathodenableitern einander überlappend elektrisch leitend mit dem Kollektor des ersten Zelldeckels verbunden werden. Durch den bereichsweisen Überlapp kann die erforderliche Fläche auf dem Kollektor zum Verbinden der Kathodenableiter minimiert werden.

Vorteilhafterweise werden Pakete von Kathodenableitern eines ersten Zellstapels in einem ersten Schritt mit dem Kollektor verbunden. Die Pakete von Kathodenableitern eines zweiten Zellstapels werden anschließend zumindest bereichsweise auf den verbundenen Kathodenableitern des ersten Zellstapels angeordnet und mit diesen und/oder durch diese hindurch mit dem Kollektor elektrisch leitend verbunden. Eine derartige Verbindungsmethode ist technisch besonders einfach umsetzbar. Dabei können die Kathodenableiter des zweiten Zellstapels während des ersten Schritts umgeklappt oder gebogen werden, um den Zugang zu den Kathodenableitern des ersten Zellstapels zu erleichtern.

Gemäß einem weiteren Ausführungsbeispiel werden die Pakete von Kathodenableitern entlang einer Verbindungsnaht oder entlang mehrerer Verbindungsnähte mit dem Kollektor des zweiten Zelldeckels verbunden. Durch diese Maßnahme können die jeweiligen Pakete mit separaten bzw. individuell angelegten Verbindungsnähten elektrisch leitend mit dem Kollektor verbunden werden oder entlang einer gemeinsamen Verbindungsnaht, beispielsweise in Form einer Schweißnaht, mit dem Kollektor verbunden werden. Hierdurch können die Pakete von Kathodenableitern unter Berücksichtigung von Anforderungen flexibel mit dem Kollektor verbunden werden. Mehrere Verbindungsnähte erhöhen beispielsweise den Leitungsquerschnitt des Übergangs zwischen den Kathodenableitern und dem Kollektor. Das Einbringen einer Verbindungsnaht kann den Herstellungsprozess vereinfachen, da das entsprechende Werkzeug, beispielsweise ein Ultraschallschweiß-Werkzeug, lediglich entlang eines linearen Pfads verfahren wird.

Das Verfahren kann weiterhin technisch vereinfacht werden, wenn zum Verbinden der Anodenableiter und/oder Kathodenableiter des ersten Zellstapels mit dem Kollektor des ersten Zelldeckels und/oder des zweiten Zelldeckels die Anodenableiter und/oder Kathodenableiter des zweiten Zellstapels von dem Kollektor weggeklappt werden. Hierdurch kann insbesondere der Zugang des Werkzeugs, beispielsweise zum Einbringen einer Schweißnaht, vereinfacht werden.

Nach einer weiteren Ausführungsform werden die Anodenableiter und die Kathodenableiter eines Zellstapels jeweils elektrisch leitend miteinander verbunden. Insbesondere kann dieser Schritt nach dem Bereitstellen der Zellstapel bzw. vor dem Verbinden der Anodenableiter und Kathodenableiter mit den entsprechenden Kollektoren durchgeführt werden. Dabei können alle Anodenableiter eines Zellstapels miteinander zu einem Bündel bzw. Paket zusammengeheftet werden. Entsprechend können alle Kathodenableiter eines Zellstapels zu einem Paket zusammengeheftet werden. Das Zusammenheften kann mechanisch oder stoffschlüssig erfolgen. Je nach Ausgestaltung kann das Zusammenheften reversibel oder irreversibel erfolgen.

Die jeweiligen Pakete können anschließend in ihrer Form angepasst oder abgelängt werden, um ein optimales Verbinden mit den Kollektoren zu ermöglichen.

Das Zusammenheften der Anodenableiter und/oder Kathodenableiter zu Paketen in einer irreversiblen Form kann beispielsweise durch ein Ultraschallschweißen erfolgen.

Das Verbinden der Anodenableiter und/oder Kathodenableiter mit den Kollektoren des ersten Zelldeckels bzw. des zweiten Zelldeckels kann zusätzlich optimiert werden, wenn die Anodenableiter relativ zur zweiten Seite und/oder die Kathodenableiter relativ zur ersten Seite zentriert und/oder dezentriert, insbesondere im Bereich eines Rands, miteinander verbunden werden. Beispielsweise kann bei einem ersten Verbinden der Anodenableiter oder Kathodenableiter mit dem entsprechenden Kollektor, welcher zwischen zwei Zellstapel positioniert ist, ein dezentriertes Ausbilden von Paketen vorteilhaft sein, da hierdurch die Zellstapel und der Kollektor auf einer gemeinsamen ebenen Fläche angeordnet werden können, um die elektrisch leitfähige Verbindung herzustellen.

Gemäß einem weiteren Ausführungsbeispiel werden die zusammengelegten Zellstapel miteinander verbunden. Hierdurch können Zellstapel besonders komfortabel in den Zellgehäusemantel hineingesetzt werden.

Alternativ oder zusätzlich wird eine schlauchförmige Isolierhülle über die zusammengelegten Zellstapel gelegt, wobei die jeweiligen Zellstapel durch die Isolierhülle relativ zueinander ortsfest fixiert werden oder relativ zueinander verschiebbar ausgestaltet sind. Die Isolierhülle kann auch in Form eines Schrumpfschlauchs ausgestaltet sein und nach einer Wärmeapplikation die Zellstapel miteinander verbinden und außenseitig isolieren.

Bei einer weiteren alternativen oder zusätzlichen Ausgestaltung werden die zusammengelegten Zellstapel mit der Isolierhülle oder ohne die Isolierhülle in den Zellgehäusemantel hineingesetzt.

Bei einer vorteilhaften Ausführungsform wird die schlauchförmige Isolierhülle als eine Einsetzhilfe zum Hineinsetzen der Zellstapel in den Zellgehäusemantel verwendet. Dabei verbleibt die Isolierhülle nach dem Hineinsetzen im Zellgehäusemantel oder wird aus dem Zellgehäusemantel entfernt. Durch diese Maßnahme kann das Einsetzen der Zellstapel in den Zellgehäusemantel vereinfacht werden.

Nachstehend werden mehrere Ausführungsbeispiele der Erfindung anhand der Zeichnungen näher erläutert. Es zeigen:
Fig. 1 eine schematische Explosionsdarstellung zum Veranschaulichen eines Aufbaus eines Zellstapels,
Fig. 2 schematische Darstellungen eines Zellstapels mit zu Paketen gehefteten Anodenableitern und Kathodenableitern des in Fig. 1 gezeigten Zellstapels,
Fig. 3 schematische Darstellungen eines Zellstapels mit geformten Anodenableitern und Kathodenableitern des Zellstapels aus Fig. 2A und Fig. 2B,
Fig. 4 eine perspektivische Darstellung von zwei Zellstapeln, welche mit ihren Kathodenableitern an einen ersten Zelldeckel gewandt angeordnet sind,
Fig. 5 schematische Darstellungen des ersten Zelldeckels mit elektrisch leitfähig verbundenen Kathodenableitern von zwei Zellstapeln,
Fig. 6 schematische Darstellungen der in Fig. 5A gezeigten zwei Zellstapel, welche nach dem Verbinden der Kathodenableitern mit dem ersten Zelldeckel durch Umbiegen der Kathodenableitern zusammengelegt sind,
Fig. 7 eine perspektivische Darstellung zum Veranschaulichen einer Anordnung einer Isolierhülle,
Fig. 8 eine perspektivische Darstellung zum Veranschaulichen eines Schritts eines Verfahrens, bei dem die Zellstapel in einen Zellgehäusemantel positioniert werden,
Fig. 9 schematische Darstellungen zum Veranschaulichen eines Schritts des Verfahrens, bei dem ein Anodenableiter eines ersten Zellstapels mit einem Kollektor eines zweiten Zelldeckels elektrisch leitfähig verbunden wird,
Fig. 10 eine schematische Darstellung zum Veranschaulichen eines Schritts eines erfindungsgemäßen Verfahrens gemäß einem ersten Ausführungsbeispiel, bei dem Anodenableiter eines zweiten Zellstapels mit dem Kollektor des zweiten Zelldeckels elektrisch leitfähig verbunden werden,
Fig. 11 eine perspektivische Darstellung, bei welcher der Zellgehäusemantel an einer zweiten Seite mit dem zweiten Zelldeckel verschlossen wird,
Fig. 12 eine perspektivische Darstellung einer Batteriezelle, welche durch ein erfindungsgemäßes Verfahren gemäß einer Ausführungsform hergestellt ist,
Fig. 13 eine schematische Darstellung zum Veranschaulichen eines Schritts eines erfindungsgemäßen Verfahrens gemäß einem zweiten Ausführungsbeispiel, bei dem Anodenableiter eines ersten Zellstapels und eines zweiten Zellstapels gleichzeitig mit dem Kollektor des zweiten Zelldeckels elektrisch leitfähig verbunden werden,
Fig. 14 schematische Darstellungen zum Veranschaulichen eines Schritts eines erfindungsgemäßen Verfahrens gemäß einem dritten Ausführungsbeispiel, bei dem Anodenableiter eines ersten Zellstapels und eines zweiten Zellstapels nacheinander an einer gemeinsamen Position mit dem Kollektor des zweiten Zelldeckels elektrisch leitfähig verbunden werden,
Fig. 15 schematische Darstellungen zum Veranschaulichen eines Aufbaus eines Zellstapels mit geformten Anodenableitern zum Veranschaulichen eines erfindungsgemäßen Verfahrens gemäß einem vierten Ausführungsbeispiel,
Fig. 16 perspektivische Darstellungen von zwei Zellstapeln mit entlang einer Höhenrichtung und entlang einer Längenrichtung geformten Anodenableitern, und
Fig. 17 eine schematische Schnittdarstellung zum Veranschaulichen eines Schritts eines erfindungsgemäßen Verfahrens gemäß einem vierten Ausführungsbeispiel, bei dem Anodenableiter eines ersten Zellstapels und eines zweiten Zellstapels entlang einer Höhenrichtung nebeneinander bzw. zueinander versetzt mit dem Kollektor des zweiten Zelldeckels elektrisch leitfähig verbunden werden.

In den Abbildungen kennzeichnen identische Bezugsziffern dieselben Elemente bzw. konstruktiven Bestandteile. Die Größen und relativen Positionen der Elemente in den Abbildungen sind nicht unbedingt maßstabsgetreu gezeichnet, und einige dieser Elemente sind vergrößert dargestellt und der Übersicht halber angepasst positioniert. Darüber hinaus sollen die besonderen Formen der gezeichneten Elemente keine Informationen über die tatsächliche Form der einzelnen Elemente vermitteln, sondern wurden lediglich zur leichteren Erkennbarkeit in den Abbildungen ausgewählt.

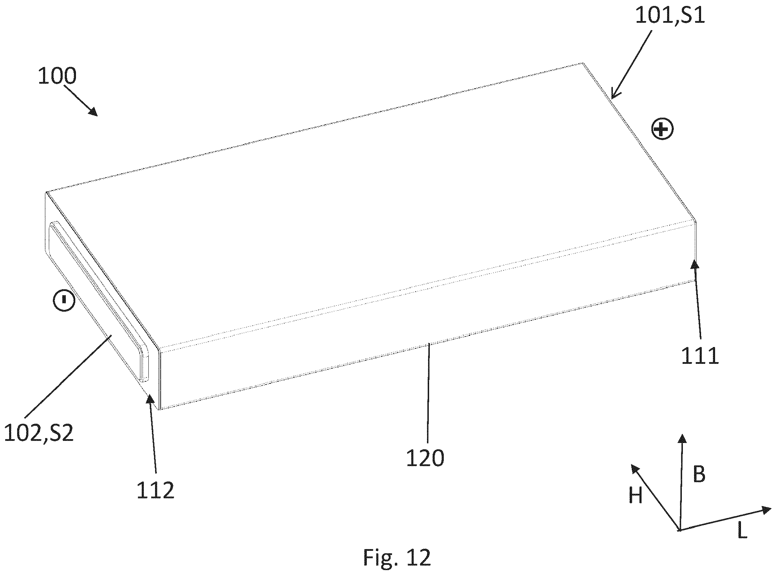

Die Figuren veranschaulichen hierbei unterschiedliche Schritte eines erfindungsgemäßen Verfahrens gemäß möglichen Ausführungsformen zum Herstellen von Batteriezellen 100. In der Fig. 12 ist beispielhaft eine Batteriezelle 100 dargestellt, welche durch das erfindungsgemäße Verfahren hergestellt werden kann.

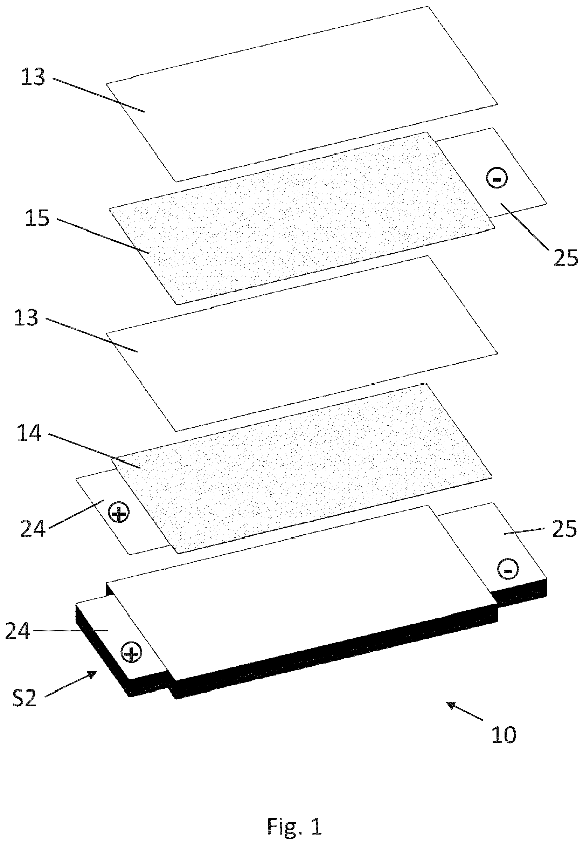

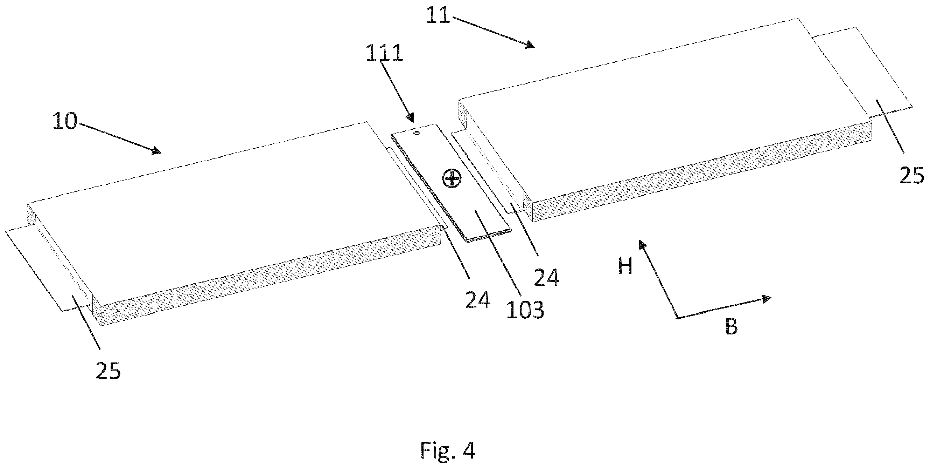

Die Fig. 1 zeigt eine schematische Explosionsdarstellung zum Veranschaulichen eines Aufbaus eines Zellstapels 10. In einem ersten Schritt des Verfahrens werden zwei Zellstapel 10, 11 bereitgestellt (s. Fig. 4). Die Zellstacks bzw. Zellstapel 10, 11 werden durch Aufstapeln von einzelnen Separatorschichten 13, Anodenschichten 15 und Kathodenschichten 14 gebildet. Die Fig. 1 zeigt beispielhaft einen ersten Zellstapel 10. Die jeweiligen Separatorschichten 13, Anodenschichten 15 und Kathodenschichten 14 sind beispielsweise als Lagen oder Blätter geformt.

Die Kathodenschichten 14 weisen Kathodenableiter 24 auf, welche über die Kathodenschichten 14 in Richtung einer ersten Seite S1 hinausragen. Analog hierzu weisen die Anodenschichten 15 Anodenableiter 25 auf, welche in Richtung einer zweiten Seite S2 über die Anodenschichten 15 hinausragen.

Die erste Seite S1 und die zweite Seite S2 sind bezogen auf die herzustellende Batteriezelle 100. Insbesondere kann auf der ersten Seite S1 ein erster Batteriepol 101 bzw. ein Pluspol und auf der zweiten Seite S2 ein zweiter Batteriepol 102 bzw. ein Minuspol der Batteriezelle 100 ausgebildet sein. Dies wird auch in der Fig. 12 anhand einer fertiggestellten Batteriezelle 100 verdeutlicht.

Im dargestellten Ausführungsbeispiel sind die Kathodenschichten 14 aus Aluminium oder einer Aluminiumlegierung hergestellt. Die Kathodenableiter 24 können ebenfalls aus Aluminium oder einer Aluminiumlegierung hergestellt sein. Dabei können die Kathodenableiter 24 integral mit den Kathodenschichten 14 ausgebildet sein. Die Anodenschichten 15 sind im dargestellten Ausführungsbeispiel aus Kupfer oder einer Kupferlegierung hergestellt. Analog zu den Kathodenableitern 24 können auch die Anodenableiter 25 aus Kupfer oder einer Kupferlegierung hergestellt sein.

Die jeweiligen Kathodenschichten 14 und Anodenschichten 15 können als ein Single-Layer oder als ein Multi-Layer Material ausgestaltet sein und beispielsweise poröse Strukturen aufweisen, um die Kapazität oder Stromfestigkeit der Batteriezelle 100 zu steuern.

Darüber hinaus sind die Anodenschichten 15, die Kathodenschichten 14 und Separatoren 13 dazu eingerichtet eine Batteriezelle 100 in Form einer Lithium-Ionen-Zelle auszubilden.

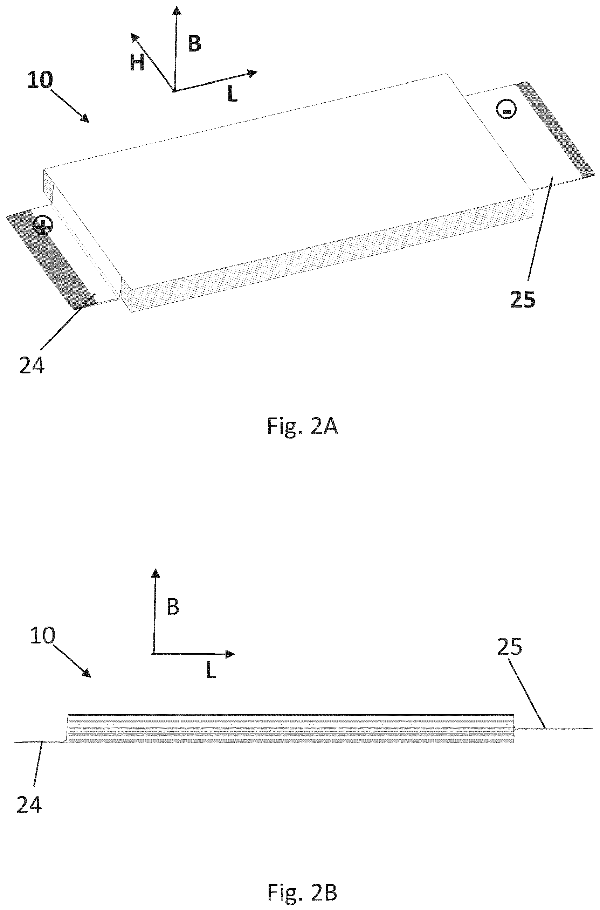

In der Fig. 2A und Fig. 2B sind schematische Darstellungen eines Zellstapels 10 mit zu Paketen gehefteten Anodenableitern 25 und Kathodenableitern 24 des in Fig. 1 gezeigten Zellstapels 10 veranschaulicht. In der Fig. 2A ist eine perspektivische Darstellung und in der Fig. 2B eine seitliche Schnittdarstellung des Zellstapels 10 gezeigt.

Die Anodenableiter 25 und die Kathodenableiter 24 werden beispielsweise endseitig geheftet bzw. geschweißt. Dieser Schritt kann beispielsweise mit Hilfe einer Ultraschallschweißung erfolgen, sodass die Vielzahl von Anodenableitern 25 und Kathodenableitern 24 als Bündel bzw. Pakete vorliegen.

Die Fig. 2B verdeutlicht, dass die Kathodenableiter 24 entlang einer Breitenrichtung B dezentriert bzw. randseitig geheftet sind. Die Anodenableiter 25 sind entlang der Breitenrichtung B zentriert geheftet.

In einem weiteren Schritt des Verfahrens werden die Kathodenableiter 24 und Anodenableiter 25 geformt. Im dargestellten Ausführungsbeispiel werden die Kathodenableiter 24 und Anodenableiter 25 durch ein Schneiden geformt. Alternativ oder zusätzlich können die Kathodenableiter 24 und/oder Anodenableiter 25 durch Stanzen, Schmelzen, Bördeln bzw. Biegen und dergleichen geformt werden. In der Fig. 2A sind schraffierte, endseitige Bereiche der Kathodenableiter 24 und Anodenableiter 25 hervorgehoben, welche durch das Formen entfernt werden. Durch ein Ablängen wird die Ausdehnung der Kathodenableiter 24 und Anodenableiter 25 entlang einer Längenrichtung L verringert.

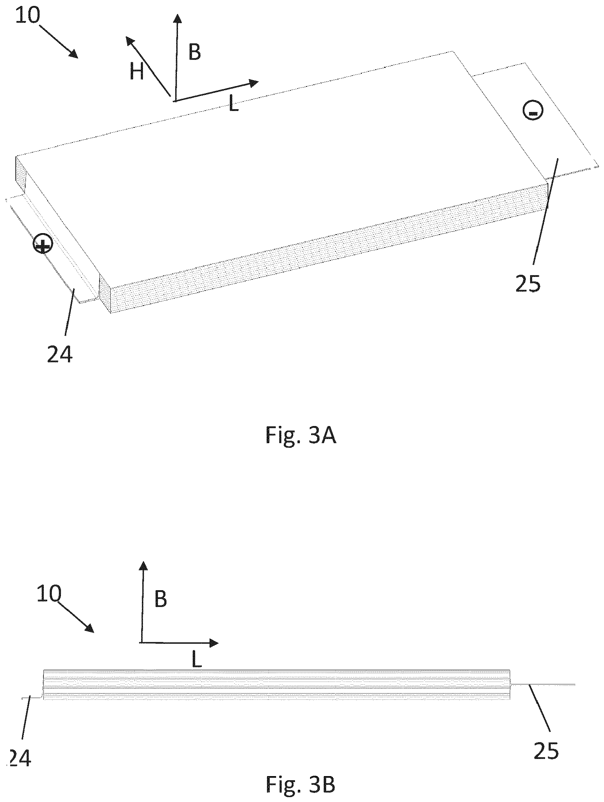

Die Fig. 3A und Fig. 3B zeigt schematische Darstellungen des Zellstapels 10 mit geformten Anodenableitern 25 und Kathodenableitern 24 des Zellstapels 10 aus Fig. 2A und Fig. 2B. In der Fig. 3A ist eine perspektivische Darstellung und in Fig. 3B eine seitliche Schnittdarstellung gezeigt. Durch das Formen bzw. endseitige Ablängen der Kathodenableiter 24 und Anodenableiter 25 können Längenunterschiede zwischen den gebündelten Kathodenableitern 24 und Anodenableitern 25 beseitigt werden.

Die Fig. 4 zeigt eine perspektivische Darstellung von zwei Zellstapeln 10, 11, welche mit ihren Kathodenableitern 24 an einen ersten Zelldeckel gewandt angeordnet sind. Die Fig. 4 veranschaulicht einen weiteren Schritt des Verfahrens, bei dem die mindestens zwei Zellstapel 10, 11 derart positioniert werden, dass ihre Kathodenableiter 24 einander zugewandt sind und auf einer Rückseite des ersten Zelldeckels 111 zumindest bereichsweise auf einem Kollektor 103 aufliegen, welcher elektrisch leitend mit dem ersten Batteriepol 101 verbunden ist.

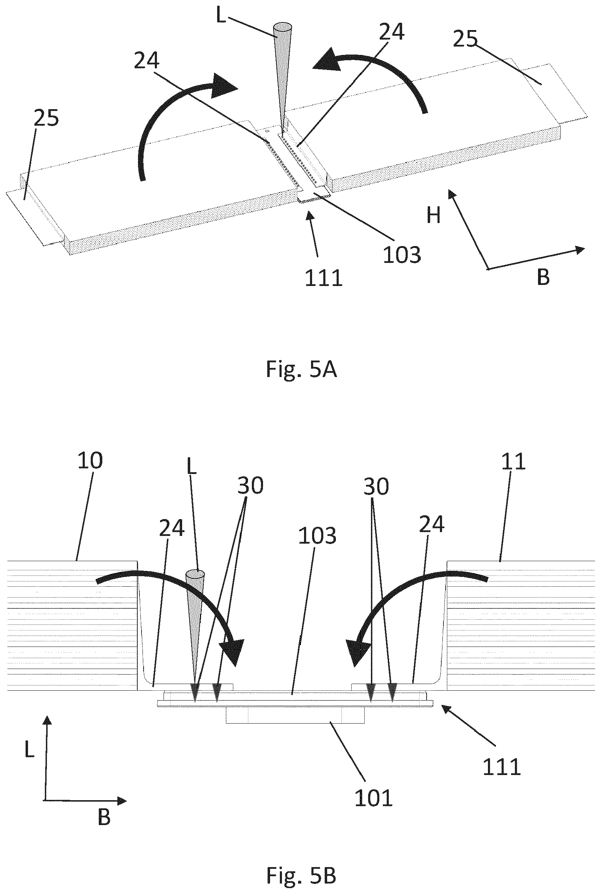

Der Aufbau des ersten Zelldeckels 111 ist in Fig. 5B in einer Schnittdarstellung illustriert. Hierbei bildet der Kollektor 103 des ersten Zelldeckels 111 beispielhaft nahezu die gesamte Rückseite aus. Der Kollektor 103 ist im dargestellten Ausführungsbeispiel ebenfalls aus Aluminium oder einer Aluminiumlegierung geformt, um den nachfolgenden Verbindungsschritt mit den Kathodenableitern 24 technisch zu vereinfachen.

Nach dem Heranführen und Positionieren der Zellstapel 10, 11 an den Kollektor 103 werden die Kathodenableiter 24 mit dem Kollektor 103 verbunden bzw. verschweißt. Dies erfolgt beispielsweise mittels Laserschweißen. Die Fig. 5A und Fig. 5B veranschaulichen diesen Schritt und zeigen schematische Darstellungen des ersten Zelldeckels 111 mit elektrisch leitfähig verbundenen Kathodenableitern 24 der Zellstapel 10, 11.

Die gebündelten Kathodenableiter 24 werden ausgehend von dem ersten Zelldeckel 111 entlang der Breitenrichtung B aufeinander zubewegt, bis ein Überlapp zwischen den Kathodenableitern 24 und dem Kollektor 103 des ersten Zelldeckels 111 vorliegt. Im dargestellten Ausführungsbeispiel werden an jedem Paket von Kathodenableitern 24 zwei Verbindungsnähte 30 durch Laserschweißen erzeugt, welche linear entlang der Höhenrichtung H verlaufen. Der Einfachheit halber sind Verbindungsnähte 30 parallel zueinander angeordnet.

Ein Laserschweiß-Werkzeug L ist schematisch in der Fig. 5A und Fig. 5B illustriert. Nach einem oder mehreren erfolgen Schweißvorgängen werden die Zellstapel 10, 11 um 90° bzw. zueinander hochgeklappt. Durch diesen Schritt, welcher mit Hilfe von Pfeilen veranschaulicht ist, werden Zellstapel 10, 11 durch Biegen und/oder Falten der Kathodenableiter 24 zusammengelegt, sodass die zwei zusammengelegten Zellstapel 10, 11 die hinausragenden Anodenableitern 25 zueinander benachbart ausrichten. Die Fig. 5A und Fig. 5B zeigen die mit dem ersten Zelldeckel 111 verbundenen Zellstapel 10, 11 vor dem Zusammenführen bzw. Klappen um 90°.

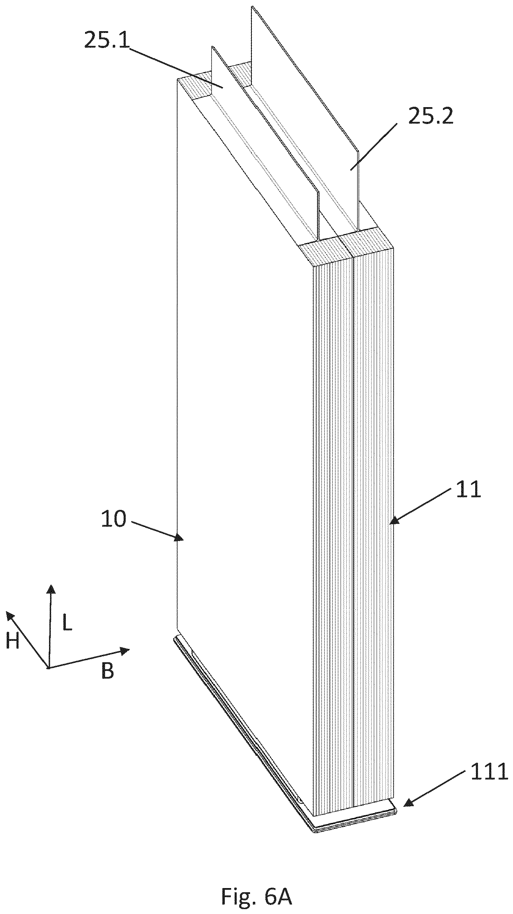

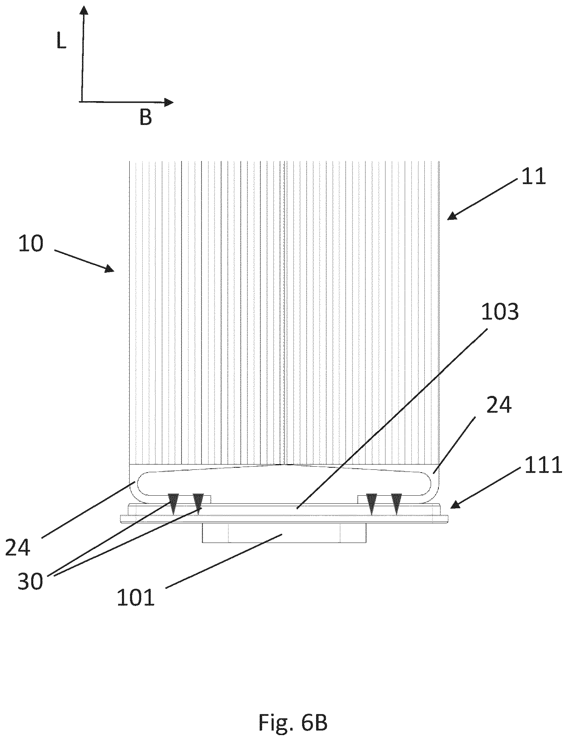

Die Fig. 6A und Fig. 6B zeigen schematische Darstellungen der in Fig. 5A gezeigten Zellstapel 10, 11, welche nach dem Verbinden der Kathodenableiter 24 mit dem ersten Zelldeckel 111 durch Umbiegen der Kathodenableiter 24 zusammengelegt sind. Insbesondere veranschaulicht die Fig. 6A, dass die Pakete von Anodenableitern 25 der Zellstapel 10, 11 unterschiedlich lang geformt sind. Beispielhaft sind die zu Paketen gebündelten Anodenableiter 25.1 des ersten Zellstapels 10 gegenüber Anodenableitern 25.2 des zweiten Zellstapels 11 kürzer ausgeführt.

Die Fig. 6B veranschaulicht in einer Schnittdarstellung die gebogenen Kathodenableiter 24. Durch das Zusammenlegen der Zellstapel 10, 11 bilden die mit dem Kollektor 103 elektrisch leitend verbundenen Kathodenableiter 24 eine C-Form bzw. U-Form aus.

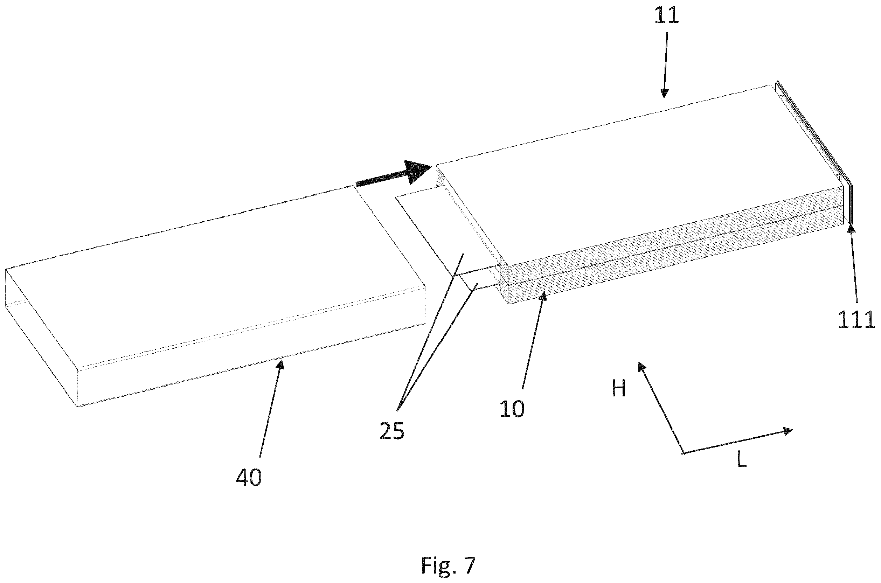

Die Fig. 7 zeigt in einer perspektivischen Darstellung einen optionalen Schritt des Verfahrens, bei dem eine Isolierhülle 40 appliziert wird. Die Isolierhülle 40 umgreift dabei die zusammengelegten Zellstapel 10, 11 mantelseitig. Hierfür kann die Isolierhülle 40 beispielsweise in Form einer rohrförmigen Kunststofffolie ausgestaltet sein, die über die Zellstapel 10, 11 entlang der Längenrichtung L geschoben wird.

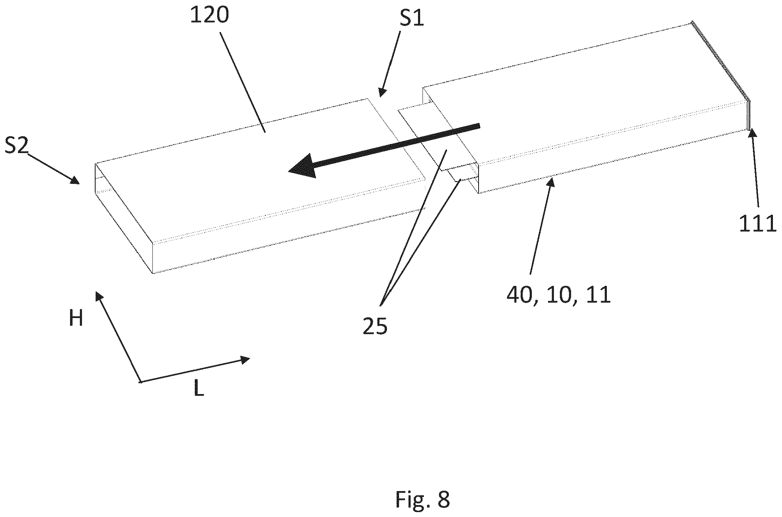

Ein weiterer Schritt des Verfahrens ist in der Fig. 8 gezeigt, bei dem die Zellstapel 10, 11 in einem Zellgehäusemantel 120 positioniert werden. Hierfür werden die zusammengelegten Zellstapel 10, 11 mit der aufgesetzten Isolierhülle 40 in den Zellgehäusemantel 120 geschoben. Bei diesem Schritt kann der erste Zelldeckel 111 mit den elektrisch leitend verbundenen Kathodenableitern 24 den Zellgehäusemantel 120 einseitig an der ersten Seite S1 verschließen. Der Zellgehäusemantel 120 kann als ein Strang-Press-Profil ausgestaltet sein und ist an der ersten Seite S1 und an der zweiten Seite S2 geöffnet. Im dargestellten Ausführungsbeispiel besteht der Zellgehäusemantel 120 aus Aluminium.

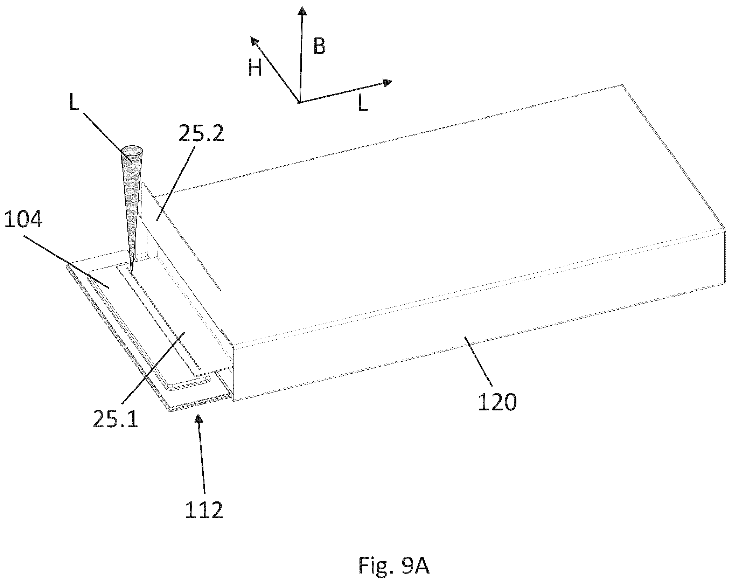

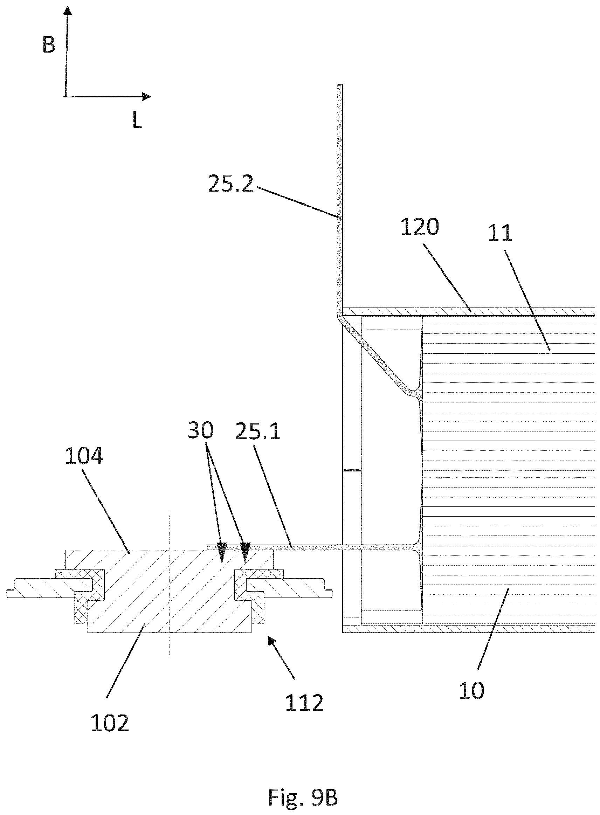

Die Fig. 9A und Fig. 9B zeigen schematische Darstellungen zum Veranschaulichen eines weiteren Schritts des Verfahrens, bei dem der an der zweiten Seite S2 aus dem Zellgehäusemantel 120 hinausragender Anodenableiter 25.1 des ersten Zellstapels 10 mit einem Kollektor 104 des zweiten Zelldeckels 112 elektrisch leitfähig verbunden wird. Insbesondere wird zuerst der kürzer ausgestaltete Anodenableiter 25.1 des ersten Zellstapels 10 elektrisch leitend mit dem rückseitig auf dem zweiten Zelldeckel 112 angeordneten Kollektor 104 verbunden. Dieser Schritt erfolgt analog zu den Kathodenableitern 24 mit Hilfe eines Laserschweiß-Werkzeugs L. Der Kollektor 104 ist an die Anodenableiter 25 angepasst ausgeführt und besteht ebenfalls aus Kupfer. Die Fig. 9B verdeutlicht den Aufbau des zweiten Zelldeckels 112 und die Verbindung zwischen dem Kollektor 104 und dem zweiten Batteriepol 102 des zweiten Zelldeckels 112.

Zur Sicherstellung des Zugangs des Laserschweiß-Werkzeugs L sind die gebündelten Anodenableiter 25.2 des zweiten Zellstapels 11 in Breitenrichtung B geklappt bzw. geschwenkt. Dieser Zwischenschritt ist in Fig. 9B besonders deutlich dargestellt. In einem nachfolgenden Schritt werden auch die gebündelten Anodenableiter 25.2 des zweiten Zellstapels 11 mit dem Kollektor 104 des zweiten Zelldeckels 112 elektrisch leitend verbunden.

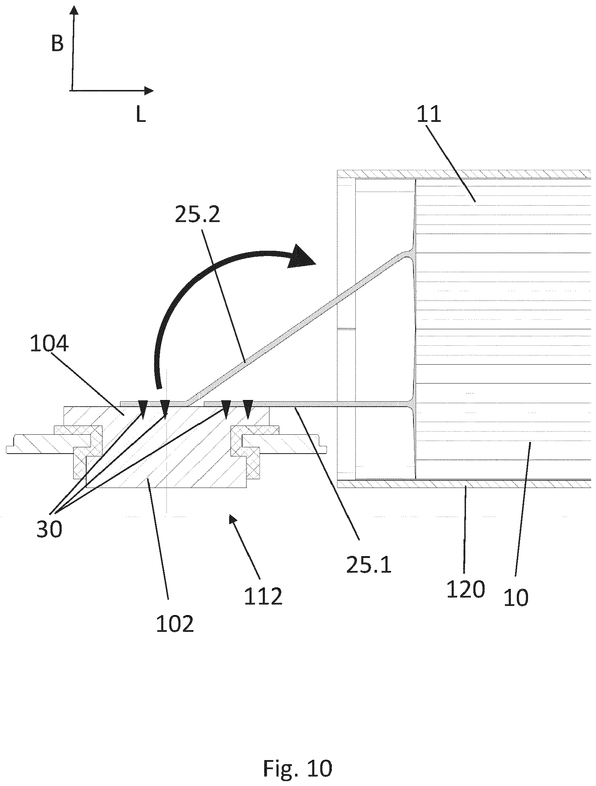

Gemäß dem ersten Ausführungsbeispiel des Verfahrens werden die Anodenableiter 25.2 des zweiten Zellstapels 11 an einer entlang der Breitenrichtung B gegenüber den Anodenableitern 25.1 des ersten Zellstapels 10 versetzten Position auf dem Kollektor 104 des zweiten Zelldeckels 112 verschweißt. Ein entsprechendes Resultat ist in der Fig. 10 verdeutlicht.

Insbesondere wird hier der Längenunterschied zwischen den Anodenableitern 25.1 des ersten Zellstapels 10 und den Anodenableitern 25.2 des zweiten Zellstapels 11 zum versetzten Verbinden der Anodenableiter 25 der jeweiligen Zellstapel 10, 11 genutzt. Die Fig. 10 veranschaulicht diesen Schritt des Verfahrens in einer Schnittdarstellung. Anschließend kann der mit den Anodenableitern 25 elektrisch leitend verbundene zweite Zelldeckel 112 um 90° geklappt werden. Dies wird durch den Pfeil illustriert.

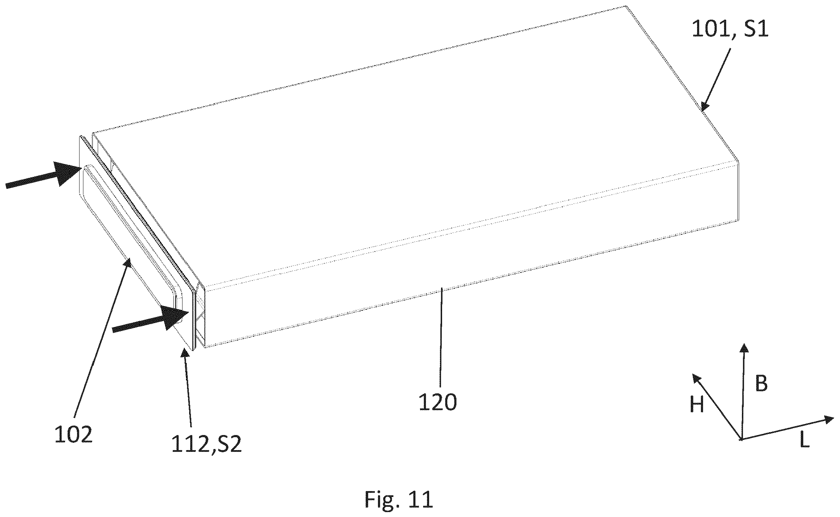

Die Fig. 11 zeigt eine perspektivische Darstellung, bei welcher der Zellgehäusemantel 120 an der zweiten Seite S2 mit dem zweiten Zelldeckel 112 verschlossen wird. Je nach Ausgestaltung können die Zelldeckel 111, 112 mit dem Zellgehäusemantel 120 verschweißt und/oder verpresst werden, um die in Fig. 12 gezeigte Batteriezelle 100 fertigstellen zu können.

Bei dem Verfahren gemäß dem ersten Ausführungsbeispiel werden die Anodenableiter 25.1 des ersten Zellstapels 10 und die Anodenableiter 25.2 des zweiten Zellstapels 11 nebeneinander bzw. parallel zueinander auf dem Kollektor 104 des zweiten Zelldeckels 112 verschweißt. Hierdurch erfolgt eine Kontaktierung der Anodenableiter 25 entlang der gesamten Ausdehnung der Anodenableiter 25 in Höhenrichtung H. Des Weiteren erfolgen zwei Schweißvorgänge mit jeweils einer halben Anzahl an Anodenableiter 25.

Die Fig. 12 zeigt eine perspektivische Darstellung einer Batteriezelle 100, welche durch ein erfindungsgemäßes Verfahren gemäß einer Ausführungsform hergestellt ist.

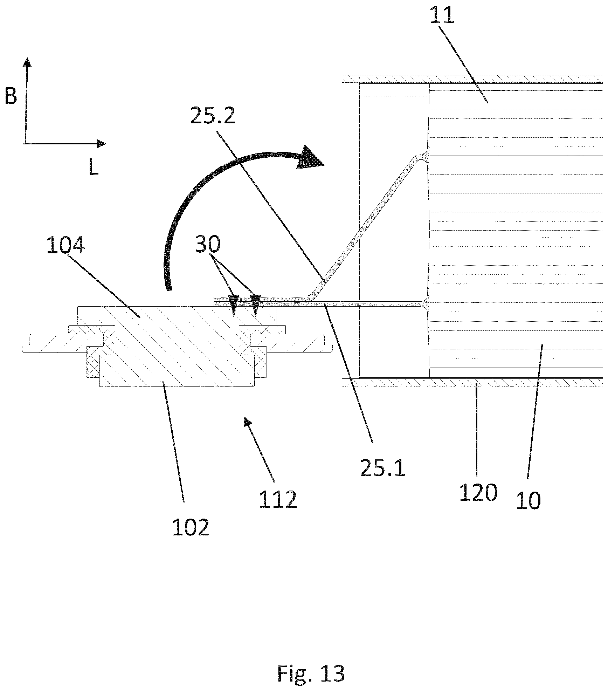

In Fig. 13 ist eine schematische Darstellung zum Veranschaulichen eines Schritts eines erfindungsgemäßen Verfahrens gemäß einem zweiten Ausführungsbeispiel gezeigt, bei dem Anodenableiter 25.1, 25.2 eines ersten Zellstapels 10 und eines zweiten Zellstapels 11 gleichzeitig mit dem Kollektor 104 des zweiten Zelldeckels 112 elektrisch leitfähig verbunden werden. Dieser Schritt kann als eine Alternative zum in Fig. 10 veranschaulichten Schritt betrachtet werden. Im Unterschied zum ersten Ausführungsbeispiel werden Anodenableiter 25.1, 25.2 beider Zellstapel 10, 11 endseitig auf den Kollektor 104 gelegt und zeitgleich mit dem Kollektor 104 verschweißt. Hierdurch können alle Anodenableiter 25.1, 25.2 mit lediglich einer Schweißung elektrisch leitend mit dem Kollektor 104 verbunden werden. Mehrere Schritte zum Verschweißen der Anodenableiter 25.1, 25.2 können somit entfallen.

Nach dem Verschweißen der Anodenableiter 25.1, 25.2 wird analog zu der Fig. 10, Fig. 11 und Fig. 12 der zweite Zelldeckel 112 um 90° geklappt und in den Zellgehäusemantel 120 gepresst, um die zweite Seite S2 des Zellgehäusemantels 120 zu verschließend. Hierdurch wird die Batteriezelle 100 fertiggestellt.

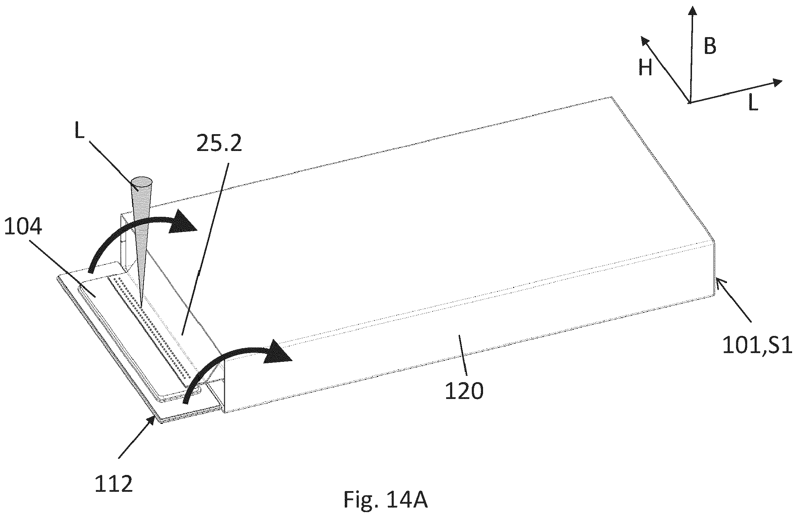

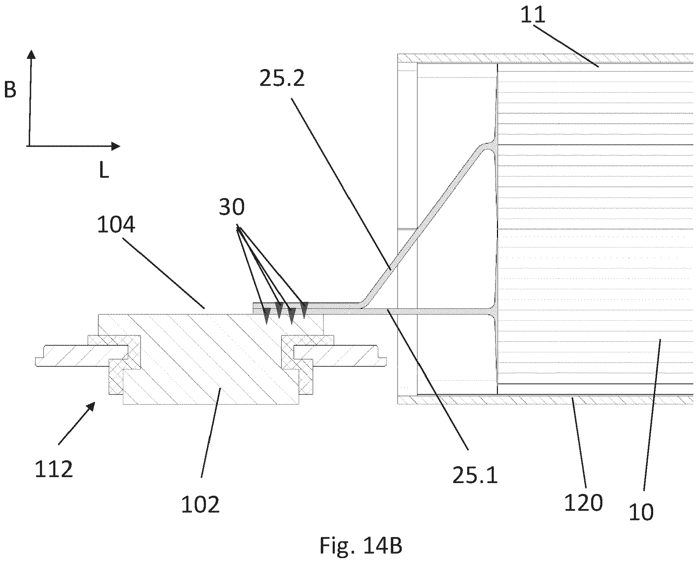

Die Fig. 14A und Fig. 14B zeigen schematische Darstellungen zum Veranschaulichen eines Schritts eines erfindungsgemäßen Verfahrens gemäß einem dritten Ausführungsbeispiel, bei dem Anodenableiter 25.1 des ersten Zellstapels 10 und Anodenableiter 25.2 des zweiten Zellstapels 11 nacheinander an einer gemeinsamen Position mit dem Kollektor 104 des zweiten Zelldeckels 112 elektrisch leitfähig verbunden werden. Dieser Schritt kann als eine alternative Ausführungsform zu den in Fig. 10 und Fig. 13 gezeigten Ausführungsbeispielen betrachtet werden.

Ausgehend von dem in Fig. 9A und Fig. 9B gezeigten Schritt, werden zuerst die Anodenableiter 25.1 des ersten Zellstapels 10 mit dem Kollektor 104 verschweißt. Anschließend werden die Anodenableiter 25.2 des zweiten Zellstapels 11 auf den bereits verbundenen Anodenableitern 25.1 des ersten Zellstapels 10 positioniert und durch Laserschweißen mit den Anodenableitern 25.1 des ersten Zellstapels 10 und/oder durch diese hindurch mit dem Kollektor 104 geschweißt.

Die jeweiligen Verbindungsnähte 30 der Anodenableiter 25.2 des zweiten Zellstapels 11 und der Anodenableiter 25.1 des ersten Zellstapels 10 können einander überlagern oder zueinander versetzt durch das Laserschweiß-Werkzeug L eingebracht werden.

Nach dem Verschweißen der Anodenableiter 25.1, 25.2 wird analog zu der Fig. 10, Fig. 11 und Fig. 12 der zweite Zelldeckel 112 um 90° geklappt und in den Zellgehäusemantel 120 gepresst, um die zweite Seite S2 des Zellgehäusemantels 120 zu verschließend. Hierdurch wird die Batteriezelle 100 fertiggestellt.

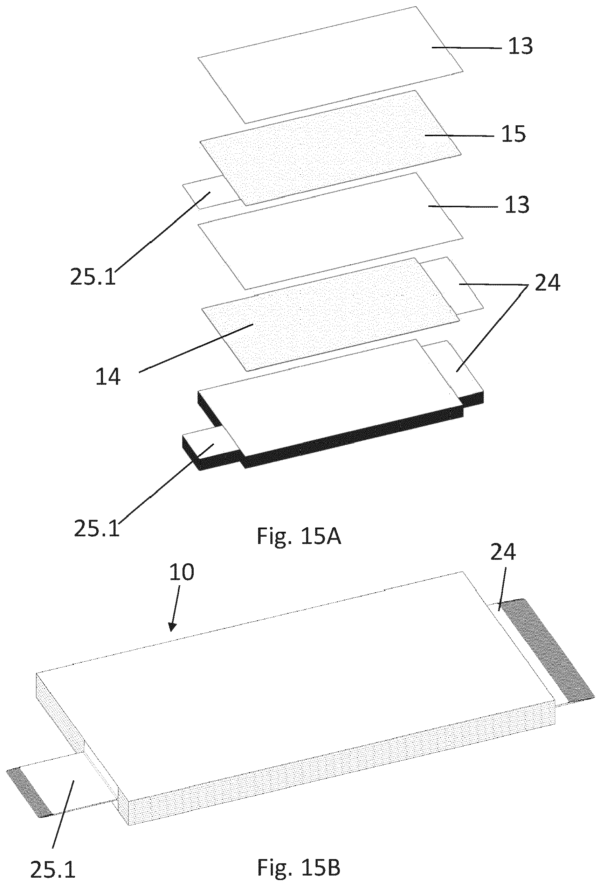

In Fig. 15A und Fig. 15B sind schematische Darstellungen zum Veranschaulichen eines Aufbaus eines Zellstapels 10 mit initial geformten Anodenableitern 25 zum Veranschaulichen eines erfindungsgemäßen Verfahrens gemäß einem vierten Ausführungsbeispiel gezeigt. Im Unterschied zu den bereits beschriebenen Ausführungsbeispielen, werden hier die Anodenableiter 25 in ihrer Ausdehnung entlang der Höhenrichtung H geformt. Insbesondere Bilden die Anodenableiter 25.1 des ersten Zellstapels 10 eine erste Hälfte und die Anodenableiter 25.2 des zweiten Zellstapels 11 eine zweite Hälfe entlang der Höhenrichtung H aus. Derart geformte Anodenableiter 25 können nebeneinander auf dem Kollektor 104 des zweiten Zelldeckels 112 angeordnet und geschweißt werden. In der Fig. 15A ist die Aufstapelung von einzelnen Anodenschichten 15 und Kathodenschichten 14 mit geformten Anodenableitern 25 zur Bildung des ersten Zellstapels 10 beispielhaft veranschaulicht.

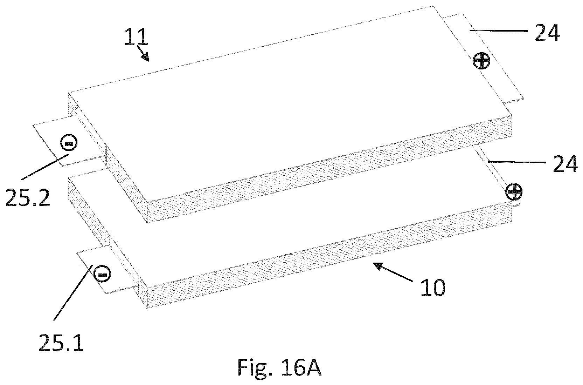

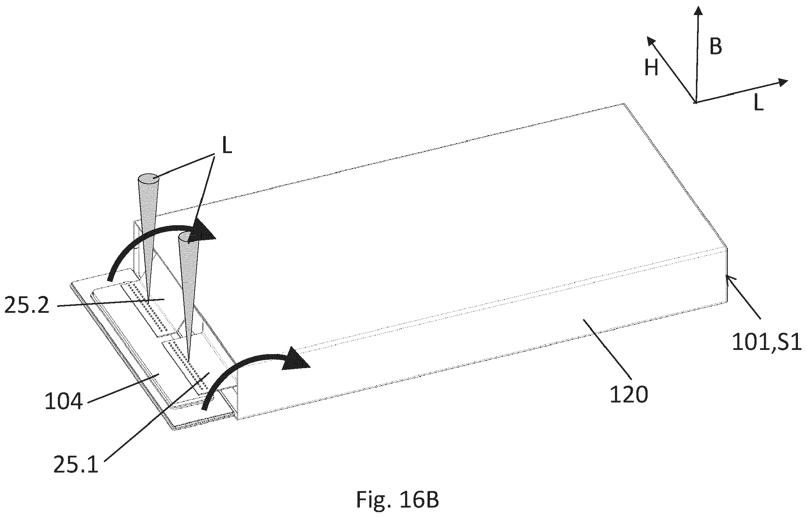

In der Fig. 16A und Fig. 16B sind perspektivische Darstellungen von zwei Zellstapeln 10, 11 mit entlang der Höhenrichtung H und entlang einer Längenrichtung L geformten Anodenableitern 25 gezeigt. Insbesondere wird in der Fig. 16B, in einer perspektivischen Darstellung, das Anordnen der Anodenableiter 25.1, 25.2 entlang der Höhenrichtung H nebeneinander auf dem Kollektor 104 illustriert. Die elektrisch leitfähige Verbindung der Anodenableiter 25 mit dem Kollektor 104 kann beispielsweise gleichzeitig mit zwei Laserschweiß-Werkzeugen L oder durch ein LaserschweißWerkzeug L mit einem Verfahrweg über die gesamte Ausdehnung entlang der Höhenrichtung erfolgen.

Nach dem Verschweißen der Anodenableiter 25.1, 25.2 wird analog zu der Fig. 10, Fig. 11 und Fig. 12 der zweite Zelldeckel 112 um 90° geklappt und in den Zellgehäusemantel 120 gepresst, um die zweite Seite S2 des Zellgehäusemantels 120 zu verschließend. Hierdurch wird die Batteriezelle 100 fertiggestellt.

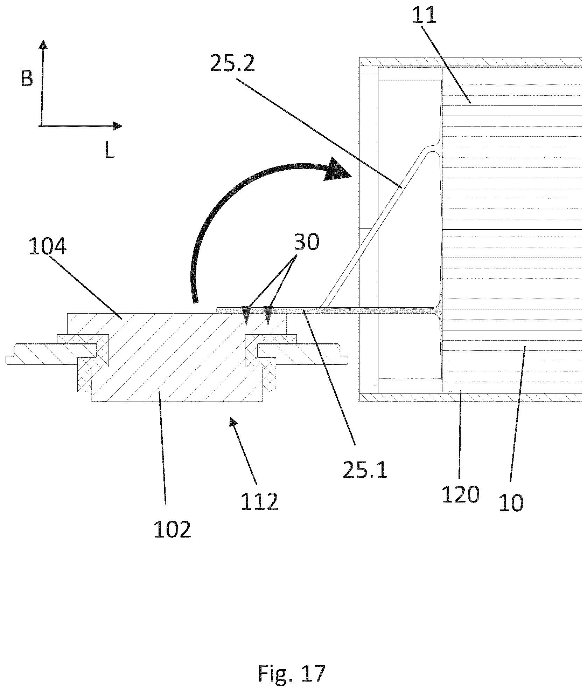

Die Fig. 17 zeigt in einer schematischen Schnittdarstellung den Schritt des erfindungsgemäßen Verfahrens gemäß dem vierten Ausführungsbeispiel, bei dem die Anodenableiter 25.1 des ersten Zellstapels 10 und die Anodenableiter 25.2 des zweiten Zellstapels 11 entlang der Höhenrichtung H nebeneinander bzw. zueinander versetzt mit dem Kollektor 104 des zweiten Zelldeckels 112 elektrisch leitfähig verbunden werden. Die jeweiligen Verbindungsnähte 30 verlaufen hierbei in zwei parallelen Linien über alle Anodenableiter 25.

## Patentansprüche

1. Verfahren zum Herstellen einer Batteriezelle (100) mit zwei Batteriepolen (101, 102), aufweisend einen ersten Zelldeckel (111) mit einem ersten Batteriepol (101) auf einer ersten Seite (S1) und aufweisend einen zweiten Zelldeckel (112) mit einem zweiten Batteriepol (102) auf einer, der ersten Seite (S1) gegenüberliegend angeordneten, zweiten Seite (S2), wobei
- zwei mindestens Zellstapel (10, 11) mit durch Separatorschichten (13) voneinander beabstandeten Anodenschichten (15) und Kathodenschichten (14) bereitgestellt werden, wobei die Kathodenschichten (14) Kathodenableiter (24) aufweisen, welche über die Kathodenschichten (14) in Richtung der ersten Seite (S1) hinausragen, und die Anodenschichten (15) Anodenableiter (25) aufweisen, welche in Richtung der zweiten Seite (S2) über die Anodenschichten (15) hinausragen,
- die mindestens zwei Zellstapel (10, 11) derart positioniert werden, dass ihre Kathodenableiter (24) einander zugewandt sind und auf einer Rückseite des ersten Zelldeckels (111) zumindest bereichsweise auf einem Kollektor (103) aufliegen, welcher elektrisch leitend mit dem ersten Batteriepol (101) verbunden ist, wobei die Kathodenableiter (24) elektrisch leitend mit dem Kollektor (103) des ersten Zelldeckels (111) verbunden werden und die mindestens zwei Zellstapel (10, 11) durch Biegen und/oder Falten der Kathodenableiter (24) zusammengelegt werden, wobei die zwei zusammengelegten Zellstapel (10, 11) mit den hinausragenden Anodenableitern (25) zueinander benachbart angeordnet werden,
- die zusammengelegten Zellstapel (10, 11) in einem Zellgehäusemantel (120) positioniert werden, wobei der erste Zelldeckel (111) mit den elektrisch leitend verbundenen Kathodenableitern (24) den Zellgehäusemantel (120) einseitig verschließt,
- die Anodenableiter (25) elektrisch leitend mit einem rückseitig auf dem zweiten Zelldeckel (112) angeordneten Kollektor (104) verbunden werden, welcher elektrisch leitend mit dem zweiten Batteriepol (102) verbunden ist, wobei der Zellgehäusemantel (120) durch den zweiten Zelldeckel (112) verschlossen wird.

2. Verfahren nach Anspruch 1, wobei die miteinander verbundenen Kathodenableiter (24) der mindestens zwei Zellstapel (10, 11) gleich lang ausgestaltet sind und wobei mindestens ein Paket aus miteinander verbundenen Anodenableitern (25) mindestens eines Zellstapels (10, 11) geformt wird, wobei durch ein Formen der Anodenableiter (25) unterschiedlich lange und/oder unterschiedlich breite Pakete von Anodenableitern (25) ausgebildet werden, wobei die unterschiedlich breiten Pakete von Anodenableitern (25) entlang einer Längenrichtung (L) und/oder Höhenrichtung (H) zueinander versetzt oder einander zumindest bereichsweise überlappend geformt werden.

3. Verfahren nach Anspruch 2, wobei die unterschiedlich langen und/oder breiten Pakete von Anodenableitern (25) örtlich zueinander versetzt oder einander zumindest bereichsweise überlappend elektrisch leitend mit dem Kollektor (104) des zweiten Zelldeckels (112) verbunden werden.

4. Verfahren nach Anspruch 2 oder 3, wobei die unterschiedlich langen und/oder breiten Pakete von Anodenableiter (25) einander überlappend elektrisch leitend mit dem Kollektor (104) des zweiten Zelldeckels (112) verbunden werden, wobei die Pakete von Anodenableitern (25.1) eines ersten Zellstapels (10) mit dem Kollektor (104) verbunden werden, die Pakete von Anodenableitern (25.2) eines zweiten Zellstapels (11) zumindest bereichsweise auf den verbundenen Anodenableitern (25.1) des ersten Zellstapels (10) angeordnet und mit diesen und/oder durch diese hindurch mit dem Kollektor (104) elektrisch leitend verbunden werden.

5. Verfahren nach Anspruch 4, wobei die Pakete von Anodenableitern (25) entlang einer Verbindungsnaht (30) oder entlang mehrerer Verbindungsnähte (30) mit dem Kollektor (104) des zweiten Zelldeckels (112) verbunden werden.

6. Verfahren zum Herstellen einer Batteriezelle (100) mit zwei Batteriepolen (101, 102), aufweisend einen ersten Zelldeckel (111) mit einem ersten Batteriepol (101) auf einer ersten Seite (S1) und aufweisend einen zweiten Zelldeckel (112) mit einem zweiten Batteriepol (102) auf einer, der ersten Seite (S1) gegenüberliegend angeordneter, zweiter Seite (S2), wobei
- zwei Zellstapel (10, 11) mit durch Separatorschichten (13) voneinander beabstandeten Anodenschichten (15) und Kathodenschichten (14) bereitgestellt werden, wobei die Kathodenschichten (14) Kathodenableiter (24) aufweisen, welche über die Kathodenschichten (14) in Richtung der ersten Seite (S1) hinausragen, und die Anodenschichten (15) Anodenableiter (25) aufweisen, welche in Richtung der zweiten Seite (S2) über die Anodenschichten (15) hinausragen,
- die Zellstapel (10, 11) derart positioniert werden, dass ihre Anodenableiter (25) einander zugewandt sind und rückseitig auf einer Rückseite des zweiten Zelldeckels (112) zumindest bereichsweise auf einem Kollektor (104) aufliegen, welcher elektrisch leitend mit dem zweiten Batteriepol (102) verbunden ist, wobei die Anodenableiter (25) elektrisch leitend mit dem Kollektor (104) des zweiten Zelldeckels (112) verbunden werden und die mindestens zwei Zellstapel (10, 11) durch Biegen und/oder Falten der Anodenableiter (25) zusammengelegt werden, wobei die zwei zusammengelegten Zellstapel (10, 11) mit den hinausragenden Kathodenableitern (24) zueinander benachbart angeordnet werden,
- die zusammengelegten Zellstapel (10, 11) in einem Zellgehäusemantel (120) positioniert werden, wobei der zweite Zelldeckel (112) mit den elektrisch leitend verbundenen Anodenableitern (25) den Zellgehäusemantel (120) einseitig verschließt,
- die Kathodenableiter (24) elektrisch leitend mit einem rückseitig auf dem ersten Zelldeckel (111) angeordneten Kollektor (103) verbunden werden, welcher elektrisch leitend mit dem ersten Batteriepol (101) verbunden ist, wobei der Zellgehäusemantel (120) durch den ersten Zelldeckel (111) verschlossen wird.

7. Verfahren nach Anspruch 6, wobei die miteinander verbundenen Anodenableiter (25) der mindestens zwei Zellstapel (10, 11) gleich lang ausgestaltet sind und wobei mindestens ein Paket aus miteinander verbundenen Kathodenableitern (24) mindestens eines Zellstapels (10, 11) geformt wird, um Zellstapel (10, 11) mit unterschiedlich langen und/oder unterschiedlich breiten Paketen von Kathodenableitern (24) auszubilden, wobei die unterschiedlich breiten Pakete von Kathodenableitern (24) zumindest entlang einer Höhenrichtung (H) und/oder Längenrichtung (L) zueinander versetzt oder einander zumindest bereichsweise überlappend geformt werden.

8. Verfahren nach Anspruch 7, wobei die unterschiedlich langen und/oder unterschiedlich breiten Pakete von Kathodenableitern (24) örtlich zueinander versetzt oder zumindest bereichsweise einander überlappend elektrisch leitend mit dem Kollektor (103) des ersten Zelldeckels (111) verbunden werden.

9. Verfahren nach Anspruch 7 oder 8, wobei die unterschiedlich langen Pakete von Kathodenableitern (24) einander überlappend elektrisch leitend mit dem Kollektor (103) des ersten Zelldeckels (111) verbunden werden, wobei Pakete von Kathodenableitern (24) eines ersten Zellstapels (10) mit dem Kollektor (103) verbunden werden, die Pakete von Kathodenableitern (24) eines zweiten Zellstapels (11) zumindest bereichsweise auf den verbundenen Kathodenableitern (24) des ersten Zellstapels (10) angeordnet und mit diesen und/oder durch diese hindurch mit dem Kollektor (103) elektrisch leitend verbunden werden.

10. Verfahren nach Anspruch 9, wobei die Pakete von Kathodenableitern (24) entlang einer Verbindungsnaht (30) oder entlang mehrerer Verbindungsnähte (30) mit dem Kollektor (103) des ersten Zelldeckels (111) verbunden werden.

11. Verfahren nach einem der Ansprüche 1 bis 10, wobei zum Verbinden der Anodenableiter (25) und/oder Kathodenableiter (24) des ersten Zellstapels (10) mit dem Kollektor (103, 104) des ersten Zelldeckels (111) und/oder des zweiten Zelldeckels (112) die Anodenableiter (25) und/oder Kathodenableiter (24) des zweiten Zellstapels (11) von dem Kollektor (103) des ersten Zelldeckels (111) weggeklappt werden.

12. Verfahren nach einem der Ansprüche 1 bis 11, wobei die Anodenableiter (25) und die Kathodenableiter (24) eines Zellstapels (10, 11) jeweils elektrisch leitend miteinander verbunden werden,

13. Verfahren nach einem der Ansprüche 1 bis 12, wobei Anodenableiter (25) relativ zur zweiten Seite (S2) und/oder die Kathodenableiter (24) relativ zur ersten Seite (S1) zentriert und/oder dezentriert, insbesondere im Bereich eines Rands, miteinander verbunden werden.

14. Verfahren nach einem der Ansprüche 1 bis 13, wobei die zusammengelegten Zellstapel (10, 11) miteinander verbunden werden, und/oder wobei eine schlauchförmige Isolierhülle (40) über die zusammengelegten Zellstapel (10, 11) gelegt wird,
und/oder
wobei die zusammengelegten Zellstapel (10, 11) mit der Isolierhülle (40) in den Zellgehäusemantel (120) hineingesetzt werden, und/oder wobei die schlauchförmige Isolierhülle (40) als eine Einsetzhilfe zum Hineinsetzen der Zellstapel (10, 11) in den Zellgehäusemantel (120) verwendet wird und nach dem Hineinsetzen im Zellgehäusemantel (120) verbleibt oder aus dem Zellgehäusemantel (120) entfernt wird.

15. Batteriezelle (100), hergestellt durch ein Verfahren gemäß einem der vorhergehenden Ansprüche, aufweisend einen ersten Zelldeckel (111) mit einem ersten Batteriepol (101) auf einer ersten Seite (S1) und aufweisend einen zweiten Zelldeckel (112) mit einem zweiten Batteriepol (102) auf einer, der ersten Seite (S1) gegenüberliegend angeordneten, zweiten Seite (S2), aufweisend mindestens zwei Zellstapel (10, 11), welche in einem Zellgehäusemantel (120) angeordnet sind, wobei der Zellgehäusemantel (120) durch die Zelldeckel (111, 112) endseitig verschlossen ist, wobei Kathodenableiter (24) der Zellstapel (10, 11) elektrisch leitend mit dem ersten Batteriepol (101) und Anodenableiter (25) elektrisch leitend mit dem zweiten Batteriepol (102) verbunden sind.
